# EUROPÄISCHE PATENTSCHRIFT

(11) **EP 4 093 640 B1**
(45) Veröffentlichungstag und Bekanntmachung des Hinweises auf die Patenterteilung: **06.12.2023**
(21) Anmeldenummer: 21700729.3
(22) Anmeldetag: 14.01.2021
(51) Int. Cl.: B60R 11/04

(54) **VERFAHREN ZUR ERMITTLUNG EINES INSTALLATIONSVERBOTSBEREICHES EINES SENSORS**
METHOD FOR DETERMINING A REGION IN WHICH A SENSOR CANNOT BE INSTALLED
PROCÉDÉ PERMETTANT DE DÉTERMINER UNE RÉGION DANS LAQUELLE UN CAPTEUR NE PEUT PAS ÊTRE INSTALLÉ

(30) Priorität: 20.01.2020 DE 102020101209
(43) Veröffentlichungstag der Anmeldung: 30.11.2022
(73) Patentinhaber: KNORR-BREMSE Systeme für Nutzfahrzeuge GmbH, 80809 München (DE)
(72) Erfinder: SCHMIEDT, Stefan, 82387 Antdorf (DE); BINDER, Klaus, 83112 Frasdorf (DE)
(86) Internationale Anmeldenummer: PCT/EP2021/050718
(87) Internationale Veröffentlichungsnummer: WO 2021/148306

(56) Entgegenhaltungen:
- Ingenieur-Bureau Der Stadt Zürich ET AL: "Stadt Zürich", , 24. März 2011 (2011-03-24), Seiten 1-4, XP055777635, DOI: 10.3931/e-rara-27947 Gefunden im Internet: URL:http://www.stadt-zuerich.ch/content/da m/stzh/pd/Deutsch/Stadtpolizei/Weitere%20D okumente/VP/Navi.pdf [gefunden am 2021-02-18]

## Beschreibung

Die vorliegende Erfindung betrifft ein Verfahren zur Ermittlung eines Installationsverbotsbereiches eines Sensors, insbesondere einer Foto- oder Videokamera, einer Windschutzscheibe eines Nutzfahrzeugs zur Verhinderung einer Sichtbehinderung eines Fahrzeugführers durch den Sensor. Das Dokument INGENIEUR-BUREAU DER STADT ZÜRICH ET AL: "Stadt Zürich", 24 März 2011 (2011-03-24), Seiten 1 - 4, XP055777635, [abgerufen im Internet am 2021.02.18] offenbart ein Verfahren nach dem Stand der Technik.

Zur Verbesserung der Fahrsicherheit von Nutzfahrzeugen werden seit einiger Zeit nachträglich eingebaute Sensoren, insbesondere auch Foto- oder Videokameras, genutzt, die an einer Windschutzscheibe des Nutzfahrzeugs angebracht werden, um so dem Fahrzeugführer zusätzliche Informationen über den Bereich vor dem Fahrzeug zur Verfüfung zu stellen. Beispiele solcher Sensoren oder Foto- oder Videokameras sind Nachtsichtgeräte, Wärmebildkameras, Infrarotsensoren oder dergleichen, mit denen ermöglicht ist, auch bei schlechter Sicht, beispielsweise verursacht durch Nebel, Regen oder Dunkelheit, Personen, Tiere oder Gegenstände frühzeitig erkennen zu können.

Um eine Sichtbehinderung eines Fahrzeugführers durch einen solchen Sensor zu verhindern, ist es bekannt, mittels auf einer Fahrbahn gezeichneter Sichtfelder / Kreise das Sichtfeld eines Fahrzeugführers in der Fahrerkabine des Nutzfahrzeugs zu überprüfen. Dazu muss gemäß der deutschen Straßenverkehrs-Zulassungs-Ordnung unter anderem ein Halbkreis (sogenannter Sichthalbkreis) um einen geloteten Punkt unterhalb des Augenpunktes des Fahrzeugführers mit einem Radius von 12m auf der Fahrbahn aufgezeichnet werden.

Bei Installationen solcher Sensoren, insbesondere Foto- oder Videokameras, in der Fahrerkabine des Nutzfahrzeugs ist in zahlreichen Werkstätten der dazu notwendige Platz nicht gegeben. Auch ist der insbesondere zeitliche Aufwand für die Erstellung solcher Fahrbahnmarkierungen sehr groß.

Aufgabe der vorliegenden Erfindung ist es, ein Verfahren zur Ermittlung eines Installationsverbotsbereiches eines Sensors, insbesondere einer Foto- oder Videokamera, einer Windschutzscheibe eines Nutzfahrzeugs zur Verhinderung einer Sichtbehinderung eines Fahrzeugführers durch den Sensor bereit zu stellen, das mit wenig Zeitaufwand, Platzbedarf und zur Ermittlung benötigter Arbeitsmitteln auch innerhalb von Werkstätten mit geringem zur Verfügung stehendem Raum möglich ist.

Diese Aufgabe wird durch ein Verfahren zur Ermittlung eines Installationsverbotsbereiches eines Sensors, insbesondere einer Foto- oder Videokamera, einer Windschutzscheibe eines Nutzfahrzeugs zur Verhinderung einer Sichtbehinderung eines Fahrzeugführers durch den Sensor mit den in Anspruch 1 angegebenen Verfahrensschritte gelöst.

Das erfindungsgemäße Verfahren zeichnet sich durch die folgenden Verfahrensschritte aus:
I Messen des Abstandes zwischen einer Sitzfläche eines Fahrzeugführerersitzes (und der Oberfläche eines Bodens, auf dem die Räder des Nutzfahrzeugs aufstehen;
II Messen eines Abstandes zwischen einer Rückenlehne eines Fahrzeugführerersitzes und der Innenfläche der Windschutzscheibe in einer vorbestimmten Höhe oberhalb der Sitzfläche des Fahrzeugführerersitzes parallel zur Oberfläche des Bodens;
III Ermittlung von Koordinaten H_{L}, V_{L} eines Eckpunktes eines rechteckigen Installationsverbotsbereiches auf der Windschutzscheibe auf Basis der in I und II gemessenen Abstandswerte durch einen Rechenalgorithmus, wobei
   H_{L} dem Abstand des Eckpunktes von einer gedachten Mittellinie des Fahrzeugführerersitzes in Richtung eines beifahrerseitigen Randes der Windschutzscheibe und
   V_{L} dem Abstand des Eckpunktes von der Oberfläche des Bodens entspricht,
   wobei der Installationsverbotsbereiches auf der Windschutzscheibe sich von dem Eckpunkt vertikal bis zum oberen Rand und horizontal bis zum fahrerseitigen Rand der Windschutzscheibe erstreckt.

Mit dem erfindungsgemäßen Verfahren ist es in einfacher und insbesondere ohne Benötigung einer großen Meßfläche ermöglicht, den Bereich auf der Windschutzscheibe des Nutzfahrzeugs zu ermitteln, in dem der Sensor aus Sichtgründen nicht platziert werden darf.

Bei der Ermittlung eines nutzbaren Anbringungsbereiches für den Sensor ist es lediglich notwendig, mithilfe einfacher Abstandsmeßinstrumente den Abstand der Sitzfläche des Fahrersitzes vom Boden, auf dem die Räder des Nutzfahrzeugs aufstehen sowie den Abstand der Rückenlehne des Fahrersitzes zur Windschutzscheibe in einer vorbestimmten Höhe relativ zur Sitzfläche des Fahrersitzes auszumessen. Daraus lässt sich mithilfe des Rechenalgorithmus in einerfacher Weise ein Eckpunkt eines rechteckigen Installationsverbotsbereiches auf der Windschutzscheibe ermitteln, auf der Windschutzscheibe markieren und so in einfacher Weise ein Installationsort auf der Widschutzscheibe auswählen, der außerhalb des Verbotsbereiches liegt.

Vorteilhafte Ausführungsvarianten der Erfindung sind Gegenstand der Unteransprüche.

Gemäß einer vorteilhaften Ausführungsvariante der Erfindung wird vor der Bestimmung des nutzbaren Anbringungsbereiches eine Vielzahl von mit dem Rechenalgorithmus berechneten Wertepaaren der Koordinaten vorab in einer Tabelle ablesbar abgespeichert, wobei in der Tabelle zumindest die Werte Hs, Ws, H_{L} und V_{L} ablesbar sind und wobei in Schritt III der Eckpunkt aus der Tabelle abgelesen wird.

Mit einer solchen Tabelle lässt sich in einfacher Weise aus den gemessenen Daten der Eckpunkt des rechteckigen Installationsverbotsbereiches auf der Windschutzscheibe ablesen.

Gemäß einer vorteilhaften Weiterbildung wird nach Bestimmung des Eckpunktes der Installationsverbotsbereich auf der Windschutzscheibe markiert.

Dadurch ist ermöglicht, die Installation des Sensors, insbesondere in Gestalt einer Videokamera zu einem späteren Zeitpunkt oder von einer anderen Person durchführen zu lassen als der Person, die die Bestimmung des Installationsverbotsbereiches vorgenommen hat.

Nachfolgend werden Ausführungsbeispiele der Erfindung anhand der beiliegenden Zeichnungen näher erläutert. Es zeigen:
- Figur 1: eine schematische Seitenansicht eines Nutzfahrzeugs mit Zugmaschine und teilweise dargestelltem Anhänger,
- Figur 2: eine schematische Frontansicht auf das Nutzfahrzeug, und
- Figur 3: eine schematische Frontansicht auf die Windschutzscheibe des Nutzfahrzeugs mit markiertem Installationsverbotsbereich.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Nutzfahrzeugs, des Sensors, des Fahrzeugführerersitzes und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

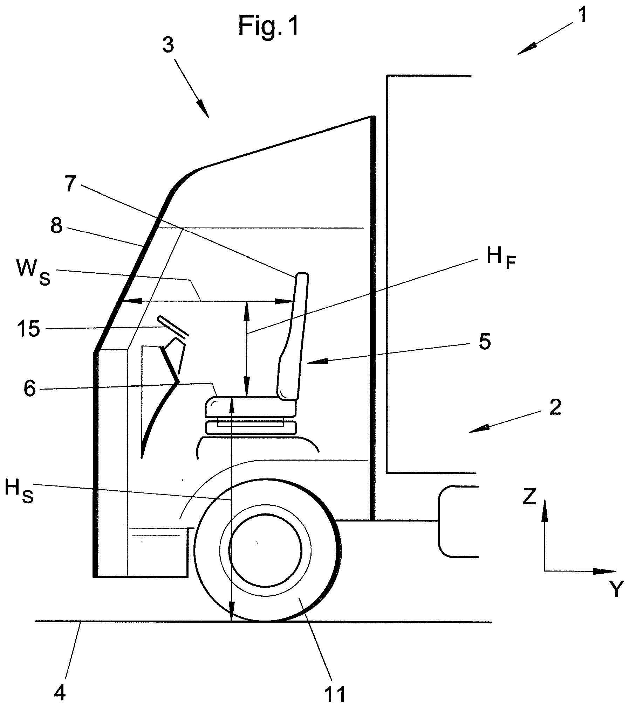

In einem kartesischen Koordinatensystem liegt die X-Achse parallel zu einer gedachten Verbindungslinie zwische Fahrzeugführertür und Beifahrertür, die Z-Achse verläuft senkrecht zur Oberfläche des Bodens, auf dem das Nutzfahrzeug 1 mit seinen Rädern 11 aufsteht (siehe Fig. 1) und die Y-Achse verläuft senkrecht zur Y-Achse und zur Z-Achse entgegen der Fahrtrichtung des Nutzfahrzeugs 1 bei Vorwärts-Geradeausfahrt.

In **Fig. 1** ist mit dem Bezugszeichen 1 insgesamt ein Nutzfahrzeug bezeichnet. Das Nutzfahrzeug weist hier beispielhaft eine Zugmaschine 3 und einen an diese angekoppelten Anhänger 2 auf. In einer Fahrerkabine des Nutzfahrzeugs 1 ist in üblicher Bauweise ein Fahrzeugführerersitz 5 mit einer Sitzfläche 6 eingebaut, der in x-Richtung betrachtet mittig hinter einem Lenkrad 15 befestigt ist.

Um eine Sichtbehinderung eines auf dem Fahrzeugführerersitz 5 sitzenden Fahrzeugführers durch einen (nicht dargestellten) Sensor, insbesondere in Gestalt einer einer Foto- oder Videokamera zu verhindern, muß ein vorbestimmter Bereich einer Windschutzscheibe 8 frei von sichtbehindernden Geräten wie dem oben genannten Sensor sein.

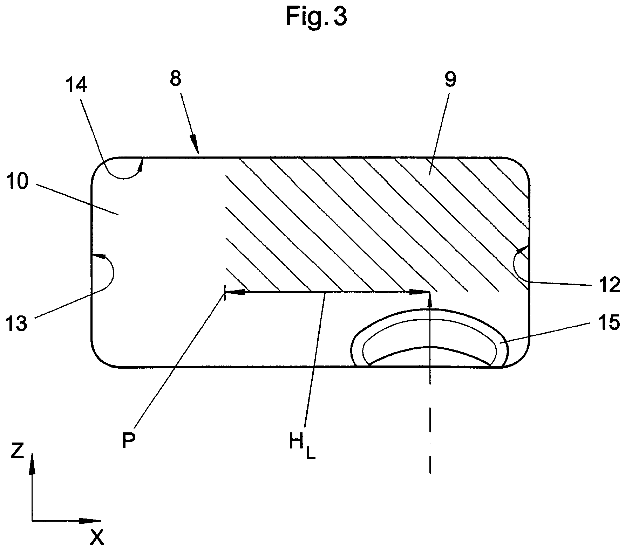

Zur Bestimmung dieses Installationsverbotsbereiches 9 der Windschutzscheibe 8, wie beispielhaft in **Figur 3** dargestellt ist, werden erfindungsgemäß die folgenden Verfahrensschritte vorgenommen:
In einem Verfahrensschritt I wird, wie in Figur 1 schematisch dargestellt ist, der Abstand Hs zwischen einer Sitzfläche 6 des Fahrzeugführerersitzes 5 und der Oberfläche eines Bodens 4, auf dem die Räder 11 des Nutzfahrzeugs 1 aufstehen, gemessen.

In einem Verfahrensschritt II wird, wie ebenfalls in Figur 1 schematisch dargestellt ist, der Abstand Ws zwischen einer Rückenlehne 6 des Fahrzeugführerersitzes 5 und der Innenfläche der Windschutzscheibe 8 in einer vorbestimmten Höhe H_{P} oberhalb der Sitzfläche 6 des Fahrzeugführer-ersitzes 5 parallel zur Oberfläche des Bodens 4 gemessen.

Die beiden Verfahrensschritte I und II können dabei in der angegbene Reihenfolge oder auch umgekehrt durchgeführt werden.

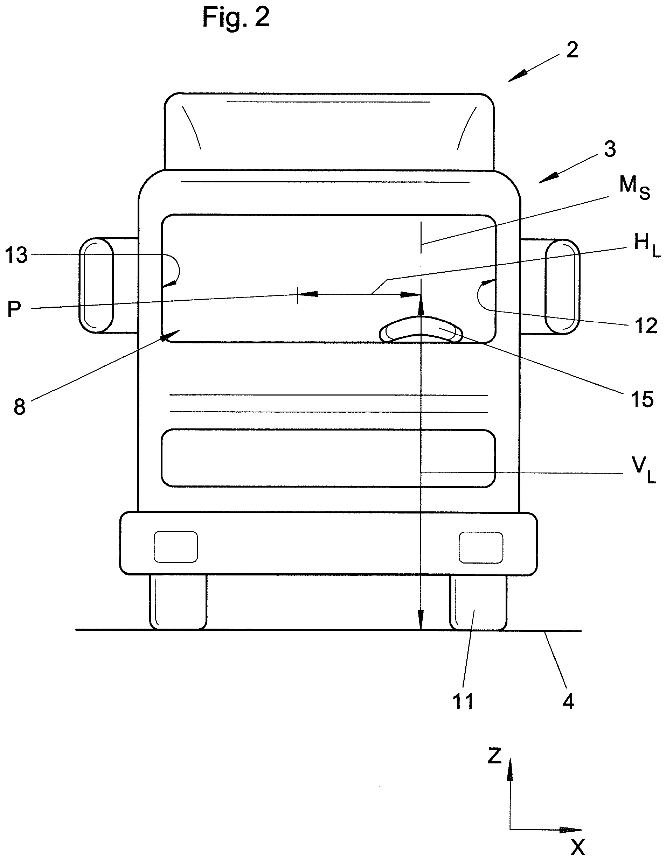

In einem Verfahrensschritt III erfolgt dann die Ermittlung von Koordinaten H_{L}, V_{L} eines Eckpunktes P, wie beispielhaft in **Figur 2** dargestellt ist, des rechteckigen Installationsverbotsbereiches 9 auf der Windschutzscheibe 8 auf Basis der in I und II gemessenen Abstandswerte durch einen Rechenalgorithmus.

Die Koordinate H_{L} entspricht dabei dem Abstand des Eckpunktes P von einer gedachten Mittellinie Ms des Fahrzeugführerersitzes 5 in Richtung eines beifahrerseitigen Randes 13 der Windschutzscheibe 8.

Die Koordinate V_{L} entspricht dem Abstand des Eckpunktes P von der Oberfläche des Bodens 4.

Der Installationsverbotsbereich 9 auf der Windschutzscheibe 8 erstreckt sich von dem Eckpunkt P vertikal in Richtung z nach oben bis zum oberen Rand 14 und horizontal in Richtung x bis zum fahrerseitigen Rand 12 der Windschutzscheibe 8.

Befindet sich der Fahrzeugführerersitz 5 (in Fahrtrichtung betrachtet) nicht links in der Fahrerkabine des Nutzfahrzeugs 1, sondern rechts, erstreckt sich der Installationsverbotsbereich 9 auf der Windschutzscheibe 8 entsprechend vom Eckpunkt P aus horizontal entgegen der Richtung x bis zum fahrerseitigen Rand 12 der Windschutzscheibe 8.

Bei der Ermittlung der Koordinaten H_{L}, V_{L} durch den Rechenalgorithmus wird entsprechend der in Deutschland gültigen StVZO (Straßenverkehrs-Zulassungs-Ordnung) ein vorbestimmter Augenpunkt in einer vorbestimmten Höhe H_{P} oberhalb der Sitzfläche 6 des Fahrzeugführerersitzes 5 parallel zur Oberfläche des Bodens 4 berücksichtigt. Diese Höhe H_{P} beträgt gemäß der aktuellen StVZO 700mm.

Zur Ablesung der Koordinaten H_{L}, V_{L} sind unterschiedliche Möglichkeiten gegeben. So ist gemäß einer bevorzugten Ausführungsvariante eine Vielzahl von mit dem Rechenalgorithmus berechneten Wertepaaren der Koordinaten H_{L}, V_{L} vorab in einer Tabelle ablesbar abgespeichert, wobei in der Tabelle zumindest die Werte Hs, Ws, H_{L} und V_{L} ablesbar sind und wobei in Schritt III der Eckpunkt P aus der Tabelle abgelesen wird.

Eine solche Tabelle kann als Ausdruck vorliegen oder in einem Datenverarbeitungsgerät abgespeichert und über einen Bildschirm des Datenverarbeitungsgerätes aufrufbar sein.

Denkbar ist auch, die gemessenen Abstandswerte in ein vorzugsweise mobiles Datenverarbeitungsgerät, beispielsweise ein Notebook, einzugeben, auf dem ein den Rechenalgorithmus enthaltenes Programm installiert ist.

Der Installationsverbotsbereiches 9 wird in einem optionalen Verfahrensschritt IV auf der Windschutzscheibe 8 markiert, so dass die Installation des Sensors, insbesondere in Gestalt einer Foto- oder Videokamera zu einem späteren Zeitpunkt ohne erneute Vermessung in einem für die Installation nutzbaren Bereich 10 der Windschutzscheibe 8 erfolgen kann.

### Bezugszeichenliste

- 1: Nutzfahrzeug
- 2: Anhänger
- 3: Zugmaschine
- 4: Boden
- 5: Fahrzeugführerersitz
- 6: Sitzfläche
- 7: Rückenlehne
- 8: Winschutzscheibe
- 9: Installationsverbotsbereich
- 10: Nutzbarer Bereich
- 11: Rad
- 12: Fahrerseitiger Rand
- 13: Beifahrerseitiger Rand
- 14: Oberer Rand
- 15: Lenkrad

- X: Richtung
- Y: Richtung
- Z: Richtung

## Patentansprüche

1. Verfahren zur Ermittlung eines Installationsverbotsbereiches (9) eines Sensors, insbesondere einer Foto- oder Videokamera, einer Windschutzscheibe (8) eines Nutzfahrzeugs (1) zur Verhinderung einer Sichtbehinderung eines Fahrzeugführers durch den Sensor,
**gekennzeichnet durch die folgenden Schritte:**
I Messen des Abstandes (Hs) zwischen einer Sitzfläche (6) eines Fahrzeugführerersitzes (5) und der Oberfläche eines Bodens (4), auf dem die Räder (11) des Nutzfahrzeugs (1) aufstehen;
II Messen eines Abstandes (W_{S}) zwischen einer Rückenlehne (7) eines Fahrzeugführerersitzes (5) und der Innenfläche der Windschutzscheibe (8) in einer vorbestimmten Höhe (H_{P}) oberhalb der Sitzfläche (6) des Fahrzeugführerersitzes (5) parallel zur Oberfläche des Bodens (4);
III Ermittlung von Koordinaten (H_{L}, V_{L}) eines Eckpunktes (P) eines rechteckigen Installationsverbotsbereiches (9) auf der Windschutzscheibe (8) auf Basis der in I und II gemessenen Abstandswerte durch einen Rechenalgorithmus, wobei
H_{L} dem Abstand des Eckpunktes (P) von einer gedachten Mittellinie (Ms) des Fahrzeugführerersitzes (5) in Richtung eines beifahrerseitigen Randes (13) der Windschutzscheibe (8) und
V_{L} dem Abstand des Eckpunktes (P) von der Oberfläche des Bodens (4) entspricht,
wobei der Installationsverbotsbereiches (9) auf der Windschutzscheibe (8) sich von dem Eckpunkt (P) vertikal bis zum oberen Rand (14) und horizontal bis zum fahrerseitigen Rand (12) der Windschutzscheibe (8) erstreckt.

2. Verfahren nach Anspruch 1, **dadurch gekennzeichnet, dass** eine Vielzahl von mit dem Rechenalgorithmus berechneten Wertepaaren der Koordinaten (H_{L}, V_{L}) vorab in einer Tabelle ablesbar abgespeichert werden, wobei in der Tabelle zumindest die Werte Hs, Ws, H_{L} und V_{L} ablesbar sind und wobei in Schritt III der Eckpunkt (P) aus der Tabelle abgelesen wird.

3. Verfahren nach Anspruch 1 oder 2, **gekennzeichnet durch den weiteren Schritt:**
IV Markieren des Installationsverbotsbereiches (9) auf der Windschutzscheibe (8).

## Claims

1. A method for determining a region in which a sensor must not be fitted (9) of a windscreen (8) of a utility vehicle (1), in order to prevent a vehicle driver's view from being obstructed by the sensor, this sensor being in particular a photo or video camera,
**characterised by the following steps:**
I the measurement of the distance (H_{S}) between a seat surface (6) of a vehicle driver's seat (5) and the surface of the ground (4) on which the wheels (11) of the utility vehicle (1) stand;
II the measurement of a distance (W_{S}) between a seatback (7) of a vehicle driver's seat (5) and the inner face of the windscreen (8) at a predetermined height (H_{P}) above the seat surface (6) of the vehicle driver's seat (5) parallel to the surface of the ground (4);
III the determination of coordinates (H_{L}, V_{L}) of a vertex (P) of a rectangular region in which a sensor must not be fitted (9) on the windscreen (8) on the basis of the distance values measured in steps I and II using a computing algorithm,
H_{L} being the distance from the vertex (P) to a notional centre line (Ms) of the vehicle driver's seat (5) in the direction of a passenger-side edge (13) of the windscreen (8), and
V_{L} being the distance between the vertex (P) and the surface of the ground (4),
the region in which a sensor must not be fitted (9) of the windscreen (8) extending from the vertex (P) vertically to the upper edge (14) and horizontally to the driver-side edge (12) of the windscreen (8).

2. A method according to claim 1, **characterised in that**
a plurality of pairs of coordinate values (H_{L}, V_{L}) calculated using the computing algorithm are saved readably in a table in advance, at least the values H_{S}, W_{S}, H_{L} and V_{L} being readable in the table, and the vertex (P) being read out of the table in step III.

3. A method according to claim 1 or 2, **characterised by the following further step:**
IV the marking on the windscreen (8) of the region in which a sensor must not be fitted (9).

## Revendications

1. Procédé de détermination d'une zone (9) d'un parebrise (8) d'un véhicule (1) utilitaire, dans laquelle il est interdit d'installer un capteur, en particulier un appareil photographique ou une caméra vidéo pour empêcher de gêner la vue d'un conducteur du véhicule par le capteur,
**caractérisé par les stades suivants :**
I mesure de la distance (H_{S}) entre la surface (6) d'un siège (5) du conducteur du véhicule et la surface d'un sol (4), sur lequel repose les roues (11) du véhicule (1) utilitaire ;
II mesure d'une distance (W_{S}) entre un dossier (7) d'un siège (5) du conducteur du véhicule et la surface intérieure du parebrise (8) à un niveau (H_{P}) déterminé à l'avance au-dessus de la surface (6) du siège (5) du conducteur du véhicule, parallèlement à la surface du sol (4) ;
III détermination de coordonnées (H_{L}, V_{L}) d'un sommet (P) d'une zone (9) rectangulaire d'interdiction d'installation sur le parebrise (8), sur la base des valeurs de distance mesurées dans I et II, par un algorithme de calcul, dans lequel
H_{L} correspond à la distance du sommet (P) à une ligne (M_{S}) médiane imaginaire du siège (5) du conducteur du véhicule dans la direction d'un bord (13) du côté du passager du parebrise (8) et
V_{L} correspond à la distance du sommet (P) à la surface du sol (4),
dans laquelle la zone (9) d'interdiction d'installation sur le parebrise (8) s'étend du sommet (P) verticalement jusqu'au bord (14) supérieur et horizontalement jusqu'au bord (12) du côté du conducteur du parebrise (8).

2. Procédé suivant la revendication 1, **caractérisé en ce que** l'on met en mémoire, de manière déchiffrable, dans une table à l'avance, de paires de valeurs, calculées par l'algorithme de calcul, des coordonnées (H_{L}, V_{L}), dans lequel on peut lire dans la table au moins les valeurs H_{S}, W_{S}, H_{L} et V_{L} et dans lequel on lit, dans le stade III, le sommet (P) dans la table.

3. Procédé suivant la revendication 1 ou 2, **caractérisé par** le stade supplémentaire :
IV marquage de la zone (9) d'interdiction d'installation sur le parebrise (8).
